# EUROPÄISCHE PATENTSCHRIFT

(11) **EP 2 183 953 B1**
(45) Veröffentlichungstag und Bekanntmachung des Hinweises auf die Patenterteilung: **08.04.2015**
(21) Anmeldenummer: 09013854.6
(22) Anmeldetag: 04.11.2009
(51) Int. Cl.: A01C 15/00, A01C 17/00, A01D 75/20

(54) **Scheibendüngerstreuer**
Disc fertilizer spreader
Semoir à engrais à disques

(30) Priorität: 06.11.2008 DE 102008056208
(43) Veröffentlichungstag der Anmeldung: 12.05.2010
(73) Patentinhaber: RAUCH Landmaschinenfabrik GmbH, 76547 Sinzheim (DE)
(72) Erfinder: Stöcklin, Volker, 77975 Ringsheim (DE); Doll, Franz, 76547 Sinzheim (DE); Rauch, Norbert, 76547 Sinzheim (DE); Dingeldey, Nico, 64397 Modautal (DE)
(74) Vertreter: Lasch, Hartmut

(56) Entgegenhaltungen:
- EP-A1- 0 857 409
- EP-A1- 1 400 162
- EP-A1- 1 504 644
- EP-A1- 2 116 122
- WO-A1-2009/021625

## Beschreibung

Die Erfindung betrifft einen von einem Traktor gezogenen oder als Anbaugerät aufgenommenen Düngerstreuer mit von der Zapfwelle, der Hydraulikanlage oder der elektrischen Energiequelle des Traktors oder einem autonomen Antrieb umlaufend angetriebenen Streuscheiben, denen der Dünger aus einem Behälter mit je einer Auslauföffnung für jede Streuscheibe mit darüber drehendem Rührwerk und einem Dosierschieber zur Steuerung der Streumenge aufgebbar ist.

Bei Scheibendüngerstreuern kommt es häufig zu Unfällen durch die fahrlässige Berührung der rotierenden Streuscheiben oder Rührwerke. In der Vergangenheit wurde versucht, die Zugänglichkeit zu den rotierenden Streuscheiben durch Abdeckungs- oder Abweisereinrichtungen bzw. mit Werkzeug zu öffnendem Schutzgitter zu verhindern, zumindest aber zu erschweren. Ein vollständiger Einschluss des "Werkzeugs" Streuscheibe bzw. Rührwerks, wie dies z.B. bei einer Kreissäge möglich ist, scheidet bei einem Düngerstreuer aus, weil die von der Streuscheibe beschleunigten Düngerpartikel die Streuscheibe im freien Flug verlassen können müssen. und die Zugänglichkeit zum Rührwerk, z.B. zu Reparaturzwecken erhalten bleiben muss. Dadurch verbleibt ein Restrisiko, dass z.B. auf dem Hof unbeaufsichtigte Kinder oder Unerfahrene unzulässiger- und fahrlässigerweise mit den rotierenden Streuscheiben bzw. Rührwerken in Kontakt kommen und sich verletzen können. Auch wenn ein Rotieren der Streuscheiben und Rührwerke auf dem Hof eigentlich nicht notwendig ist, geschieht dies gleichwohl gelegentlich in fahrlässiger Weise. Das gleiche Risiko besteht beim Nachladevorgang, bei dem gleichfalls die Streuscheiben und Rührwerke bei laufender Zapfwelle oder eingeschalteter Hydraulik entgegen warnender Hinweisen in der Betriebsanleitung des Herstellers unnötiger- und fahrlässigerweise rotieren.

Der Erfindung liegt die Aufgabe zugrunde, einen Scheibendüngerstreuer zu schaffen, der trotz einer fahrlässigen Fehlbedienung eine erhöhte Sicherheit gegen Verletzungen an den Streuscheiben und Rührwerken bietet.

Diese Aufgabe wird erfindungsgemäß dadurch gelöst, dass bei stchendem Traktor und geschlossenem Dosierschieber automatisch eine Schutzeinrichtung in Wirkung gesetzt wird, die die Streuscheiben zumindest weitgehend abdeckt, oder zumindest die Streuscheiben stillsetzt.

Die Erfindung sieht eine Schutzeinrichtung vor, deren konkrete Ausgestaltung im Wesentlichen nach Zweckmäßigkeitserwägungen erfolgen kann, solange sie die angestrebte Funktion, nämlich die Streuscheiben zumindest weitgehend abzudecken oder die Streuscheiben stillzusetzen, erfüllt. Als auslösendes Moment für das automatische Wirksamwerden der Schutzeinrichtung dienen der Stillstand des Traktors und der Schließzustand der Dosierschieber.

Es ist bekannt (EP 0 857 409 B1) einen Schutzbügel in Schutzposition zu bringen, wenn und solange der Streuer in Betrieb ist, die Streuscheiben also umlaufen, und aus der Schutzposition herauszubewegen, wenn der Streuer außer Betrieb ist. Damit wird die durch die Erfindung bezweckte Sicherheitsfunktion gerade nicht erreicht.

In einer weiteren Ausgestaltung der Erfindung werden bei Vorliegen der gleichen Voraussetzungen auch die Rührwerke stillgesetzt.

Gemäß einem Ausführungsbeispiel der Erfindung ist vorgesehen, dass die Wirkung der Schutzeinrichtung nur durch aktives Betätigen eines Bedienelementes aufgehoben werden kann.

Ferner ist vorgesehen, dass die Aufhebung der Wirkung der Schutzeinrichtung nur für kurze Zeit, z.B. wenige Sekunden, anhält, wenn der Traktor nicht in dieser Zeit losfährt. Durch diese Maßnahme soll erreicht werden, dass die Schutzeinrichtung nach Ablauf dieser Zeitspanne wieder automatisch in Wirkung tritt.

Um zu vermeiden, dass es beim Streubetrieb zu ungewollten Störungen kommt, bleibt die Schutzeinrichtung nur bei fahrendem Traktor und geöffnetem Dosierschieber außer Wirkung.

Gemäß einem Ausführungsbeispiel ist die Möglichkeit vorgesehen, dass die Schutzeinrichtung für die Zugänglichkeit der Streuscheiben, z.B. für den Streuscheibenwechsel, eine Abdrehprobe oder eine Restmengenentleerung durch eine aktive Betätigung außer Wirkung setzbar ist.

Die aktive Betätigung zum Aufheben der Wirksamkeit der Schutzeinrichtung erfolgt zweckmäßigerweise mittels eines elektronischen Bedienelementes.

Das Vorhandensein jeder Streuscheibe wird vorteilhafterweise mittels eines Sensors überwacht.

Die Antriebsachsen für die Streuscheiben sind bei stehendem Traktor und geschlossenem Dosierschieber nur bei abgenommenen Streuscheiben, also bei Wirksamkeit des Sensors, aktivierbar, z.B. für eine Abdrehprobe oder eine Restmengenentleerung.

In einer vorteilhaften Ausführung ist vorgesehen, dass die Schutzeinrichtung für die Streuscheiben ein korbähnliches Gitter aufweist, das sich im Aktivierungsfall mittels eines mechanischen, hydraulischen oder elektrischen Antriebs vollständig vor die Streuscheiben bewegt. Auf diese Weise wird ein mechanisch konstruktiver Zugriffsschutz geschaffen.

Stattdessen kann die Schutzeinrichtung von einem sensorischen Vorhang, z.B. einem Laservorhang, gebildet sein, der den frei zugänglichen Bereich der Streuscheiben einhüllt und diese bei Durchdringen eines Gegenstandes stillsetzt.

Gemäß einem weiteren Ausführungsbeispiel der Erfindung ist vorgesehen, dass die Schutzeinrichtung eine Logikschaltung im Bedienterminal oder Jobrechner des Düngerstreuers aufweist, die den Antrieb der Streuscheiben und gegebenenfalls der Rührwerke abschaltet, wenn die Dosierschieber geschlossen sind und der Traktor steht. In diesem Fall wird die Schließposition der Dosierschieber und der Stillstand des Traktors'über die bordeigenen Geräte zum Abschalten des Antriebs der Streuscheiben bzw. der Rührwerke herangezogen.

Um auch bei Störfällen oder weniger aufwändigen Scheibenstreuern eine sicherheitstechnische Funktion zu gewährleisten, ist vorgesehen, dass bei stehendem Traktor und geschlossenen Dosierschiebern, aber dennoch laufenden Streuscheiben bzw. Rührwerken ein lauter Signalton und/oder eine Alarmanzeige im Display eines Bedienterminals aktiviert wird.

Gemäß einem weiteren Ausführungsbeispiel ist vorgesehen, dass bei einem Scheibendüngerstreuer, bei dem z.B. für die Verteilung von Kleinstmengen wie z.B. Schneckenkorn, die fahrgeschwindigkeitsabhängige Regelung der Dosiermenge abgeschaltet wird, das anliegende Fahrgeschwindigkeitssignal nur dazu herangezogen wird, die Schutzeinrichtung außer Wirkung zu setzen.

Durch ein festgestelltes Fahrgeschwindigkeitssignal ist die Fahrt des Traktors verifiziert, was als Voraussetzung dafür dient, dass die Schutzeinrichtung außer Wirkung gesetzt wird.

In einer weiteren Ausgestaltung der Erfindung ist vorgesehen, dass die Schutzeinrichtung eine dem Antrieb der Streuscheiben von der Gelenkwelle des Traktors durch eine elektrisch, hydraulisch oder mechanisch trennende Kupplung aufweist.

Eine andere Ausführungsform zeichnet sich dadurch aus, dass die Schutzeinrichtung bei einem unterbrechenden Antrieb schnell stillsetzende Bremselemente aufweist.

Schließlich ist vorgesehen, dass bei Stromausfall und oder einem Defekt der Sensoren die Streuscheiben sofort stillgesetzt werden. Hierfür können zusätzliche Bremselemente für die sofortige Stillsetzung des Antriebs vorgesehen sein.

## Patentansprüche

1. Von einem Traktor gezogener oder als Anbaugerät aufgenommener Düngerstreuer mit von der Zapfwelle, der Hydraulikanlage oder einer elektrischen Energiequelle des Traktors oder einem autonomen Antrieb umlaufend angetriebenen Streuscheiben, denen der Dünger aus einem Behälter mit je einer Auslauföffnung für jede Streuscheibe mit darüber drehendem Rührwerk und einem Dosierschieber zur Steuerung der Streumenge aufgebbar ist, **dadurch gekennzeichnet, dass** bei stehendem Traktor und geschlossenem Dosierschieber automatisch eine Schutzeinrichtung in Wirkung gesetzt wird, die die Streuscheiben zumindest weitgehend abdeckt, oder zumindest die Streuscheiben stillsetzt.

2. Düngerstreuer nach Anspruch 1, **dadurch gekennzeichnet, dass** die Schutzeinrichtung auch die Rührwerke stillsetzt.

3. Düngerstreuer nach Anspruch 1 oder 2, **dadurch gekennzeichnet, dass** die Wirkung der Schutzeinrichtung nur durch aktives Betätigen eines Bedienelementes aufhebbar ist.

4. Düngerstreuer nach einem der Ansprüche 1 bis 3, **dadurch gekennzeichnet, dass** die Aufhebung der Wirkung der Schutzeinrichtung nur für kurze Zeit, z.B. wenige Sekunden, anhält, wenn der Traktor nicht in dieser Zeit losfährt.

5. Düngerstreuer nach einem der Ansprüche 1 bis 4, **dadurch gekennzeichnet, dass** die Schutzeinrichtung nur bei fahrendem Traktor und geöffnetem Dosierschieber außer Wirkung bleibt.

6. Düngerstreuer nach einem der Ansprüche 1 bis 5, **dadurch gekennzeichnet, dass** die Schutzeinrichtung für die Zugänglichkeit der Streuscheiben, z.B. für den Streuscheibenwechsel, eine Abdrehprobe oder eine Restmengenentleerung durch eine aktive Betätigung außer Wirkung seztbar ist.

7. Düngerstreuer nach einem der Ansprüche 1 bis 6, **dadurch gekennzeichnet, dass** die Schutzeinrichtung für die Stillsetzung der Rührwerke für eine Abdrehprobe oder eine Restmengenentleerung durch eine aktive Betätigung außer Wirkung setzbar ist.

8. Düngerstreuer nach Anspruch 6 oder 7, **dadurch gekennzeichnet, dass** die aktive Betätigung mittels eines elektronischen Bedienelementes erfolgt.

9. Düngerstreuer nach einem der Ansprüche 1 bis 8, **dadurch gekennzeichnet, dass** das Vorhandensein jeder Streuscheibe mittels eines Sensors kontrahierbar ist.

10. Düngerstreuer nach einem der Ansprüche 1 bis 9, **dadurch gekennzeichnet, dass** die Antriebsachen für die Streuscheiben nur bei abgenommenen Streuscheiben, z.B. für eine Abdrehprobe oder eine Restmengenentleerung aktivierbar sind.

11. Düngerstreuer nach einem der Ansprüche 1 bis 10, **dadurch gekennzeichnet, dass** die Schutzeinrichtung ein korbähnliches Gitter aufweist, das sich im Aktivierungsfall mittels eines mechanischen, hydraulischen oder elektrischen Antriebs vollständig vor die Streuscheiben bewegt.

12. Düngerstreuer nach einem der Ansprüche 1 bis 10, **dadurch gekennzeichnet, dass** die Schutzeinrichtung von einem sensorischen Vorhang, z.B. einem Laservorhang, gebildet ist, der die Streuscheiben beim Durchdringen eines Gegenstandes sofort stillsetzt, wenn die Dosierschieber geschlossen sind und der Traktor steht.

13. Düngerstreuer nach einem der Ansprüche 1 bis 10, **dadurch gekennzeichnet, dass** die Schutzeinrichtung eine Logikschaltung im Bedienterminal oder Jobrechner des Düngerstreuers aufweist, die den Antrieb der Streuscheiben bzw. der Rührwerke abschaltet, wenn die Dosierschieber geschlossen sind und der Traktor. Steht.

14. Düngerstreuer nach einem der Ansprüche 1 bis 13, **dadurch gekennzeichnet, dass** bei stehendem Traktor und geschlossenen Dosierschiebern, aber dennoch laufenden Streuscheiben bzw. Rührwerken ein lauter Signalton und/oder eine Alarmanzeige im Display eines Bedienterminals aktiviert wird.

15. Düngerstreuer nach einem der Ansprüche 1 bis 14, **dadurch gekennzeichnet, dass** bei einem Düngerstreuer bei abgeschalteter fahrgeschwindigkeitsabhängiger Regelung der Dosiermenge, das anliegende Fahrgeschwindigkeitssignal nur dazu herangezogen wird, die Schutzeinrichtung außer Wirkung zu setzen.

16. Düngerstreuer nach einem der Ansprüche 1 bis 13, **dadurch gekennzeichnet, dass** bei einem Antrieb der Streuscheiben bzw. der Rührwerke von der Gelenkwelle des Traktors die Schutzeinrichtung eine elektrisch, hydraulisch oder mechanisch trennende Kupplung im Antriebsstrang aufweist.

17. Düngerstreuer nach einem der Ansprüche 1 bis 15, **dadurch gekennzeichnet, dass** die Schutzeinrichtung den Antrieb schnell stillsetzende Bremselemente aufweist.

18. Düngerstreuer nach einem der Ansprüche 1 bis 17, **dadurch gekennzeichnet, dass** bei Stromausfall und/oder einem Defekt der Sensoren die Streuscheiben bzw. die Rührwerke sofort stillsetzbar sind.

19. Düngerstreuer nach Anspruch 18, **dadurch gekennzeichnet, dass** Bremselemente für die sofortige Stillsetzung des Antriebs vorgesehen sind.

## Claims

1. Fertilizer spreader which is pulled by a tractor or is accommodated as a mounted implement, with spreading discs which are driven in a revolving manner by the power take-off shaft, the hydraulic system or an electrical energy source of the tractor or an autonomous drive and to which the fertilizer can be fed from a container having a respective outlet opening for each spreading disc, with an agitator rotating thereabove and with a metering slide for controlling the spreading quantity, **characterized in that**, when the tractor is stationary and the metering slide is closed, a protective device is automatically brought into effect which at least substantially covers the spreading discs, or at least shuts down the spreading discs.

2. Fertilizer spreader according to Claim 1, **characterized in that** the protective device also shuts down the agitators.

3. Fertilizer spreader according to Claim 1 or 2, **characterized in that** the effect of the protective device can be cancelled only by active actuation of an operating element.

4. Fertilizer spreader according to one of Claims 1 to 3, **characterized in that** the cancelling of the effect of the protective device lasts only for a short time, for example a few seconds, if the tractor does not drive off within this time.

5. Fertilizer spreader according to one of Claims 1 to 4, **characterized in that** the protective device has no effect only when the tractor is moving and the metering slide is open.

6. Fertilizer spreader according to one of Claims 1 to 5, **characterized in that** the protective device can be rendered ineffective by active actuation to provide accessibility to the spreading discs, for example for changing the spreading discs, a calibration test or emptying residues.

7. Fertilizer spreader according to one of Claims 1 to 6, **characterized in that** the protective device can be rendered ineffective by active actuation for shutting down the agitators for a calibration test or emptying residues.

8. Fertilizer spreader according to Claim 6 or 7, **characterized in that** the active actuation takes place by means of an electronic operating element.

9. Fertilizer spreader according to one of Claims 1 to 8, **characterized in that** the presence of each spreading disc is monitored by means of a sensor.

10. Fertilizer spreader according to one of Claims 1 to 9, **characterized in that** the driving axles for the spreading discs are activatable only when the spreading discs are removed, for example for a calibration test or for emptying residues.

11. Fertilizer spreader according to one of Claims 1 to 10, **characterized in that** the protective device has a basket-like grating and, in the event of activation by means of a mechanical, hydraulic or electric drive, moves completely in front of the spreading discs.

12. Fertilizer spreader according to one of Claims 1 to 10, **characterized in that** the protective device is formed by a sensory curtain, for example a laser curtain, which immediately shuts down the spreading discs when they penetrate an object when the metering slides are closed and the tractor is stationary.

13. Fertilizer spreader according to one of Claims 1 to 10, **characterized in that** the protective device has a logic circuit in the operating terminal or job computer of the fertilizer spreader, said logic circuit switching off the drive of the spreading discs or of the agitators when the metering slides are closed and the tractor is stationary.

14. Fertilizer spreader according to one of Claims 1 to 13, **characterized in that**, when the tractor is stationary and the metering slides are closed, but the spreading discs or agitators are nevertheless running, a loud signal tone and/or an alarm indication is activated in the display of an operating terminal.

15. Fertilizer spreader according to one of Claims 1 to 14, **characterized in that**, in the case of a fertilizer spreader, when the driving-speed-dependent control of the metering quantity is switched off, the driving speed signal present is used only to render the protective device ineffective.

16. Fertilizer spreader according to one of Claims 1 to 13, **characterized in that**, when the spreading discs or the agitators are driven by the propeller shaft of the tractor, the protective device has an electrically, hydraulically or mechanically disengaging coupling in the drive train.

17. Fertilizer spreader according to one of Claims 1 to 15, **characterized in that** the protective device has braking elements rapidly shutting down the drive.

18. Fertilizer spreader according to one of Claims 1 to 17, **characterized in that**, in the event of power failure and/or a defect of the sensors, the spreading discs or the agitators can immediately be shut down.

19. Fertilizer spreader according to Claim 18, **characterized in that** braking elements are provided for the immediate shutdown of the drive.

## Revendications

1. Épandeur à engrais tiré par un tracteur ou intégré comme appareil modulaire avec des disques d'épandage entraînés en rotation par l'arbre à tenon, l'installation hydraulique ou une source d'énergie électrique du tracteur ou un entraînement en entrée autonome, lesdits disques recevant l'engrais provenant du conteneur avec respectivement une ouverture d'écoulement pour chaque disque d'épandage avec un agitateur tournant au-dessus et un piston doseur pour commander la quantité épandue, **caractérisé en ce que** lorsque le tracteur est à l'arrêt et que le piston doseur est fermé, un dispositif de protection s'active automatiquement, ledit dispositif recouvrant au moins largement les disques d'épandage ou arrêtant au moins les disques d'épandage.

2. Épandeur à engrais selon la revendication 1, **caractérisé en ce que** le dispositif de protection arrête également les agitateurs.

3. Épandeur à engrais selon la revendication 1 ou 2, **caractérisé en ce que** l'action du dispositif de protection ne peut être suspendue que par actionnement actif d'un élément de commande.

4. Épandeur à engrais selon l'une quelconque des revendications 1 à 3, **caractérisé en ce que** la suspension de l'action du dispositif de protection ne peut être maintenue que pendant un temps court, par exemple quelques secondes, en même temps que le tracteur n'avance pas.

5. Épandeur à engrais selon l'une quelconque des revendications 1 à 4, **caractérisé en ce que** le dispositif de protection n'est désactivé que lorsque le tracteur avance et que le piston doseur est ouvert.

6. Épandeur à engrais selon l'une quelconque des revendications 1 à 5, **caractérisé en ce que** le dispositif de protection peut être désactivé par actionnement actif pour permettre d'accéder aux disques d'épandage, par exemple pour permettre de changer les disques d'épandage, réaliser un test de rotation ou vider les quantités restantes.

7. Épandeur à engrais selon l'une quelconque des revendications 1 à 6, **caractérisé en ce que** le dispositif de protection peut être désactivé par actionnement actif pour arrêter les agitateurs afin de réaliser un test de rotation ou de vider les quantités restantes.

8. Épandeur à engrais selon la revendication 6 ou 7, **caractérisé en ce que** l'actionnement actif se produit à l'aide d'un élément de commande électronique.

9. Épandeur à engrais selon l'une quelconque des revendications 1 à 8, **caractérisé en ce que** la présence de chaque disque d'épandage est constatée à l'aide d'un capteur.

10. Épandeur à engrais selon l'une quelconque des revendications 1 à 9, **caractérisé en ce que** les axes d'entraînement des disques d'épandage ne peuvent être activés que lorsque les disques d'épandage sont retirés, par exemple pour un test de rotation ou un vidage de quantité restante.

11. Épandeur à engrais selon l'une quelconque des revendications 1 à 10, **caractérisé en ce que** le dispositif de protection comporte un grillage de type panière se déplaçant entièrement devant les disques d'épandage en cas d'activation à l'aide d'un entraînement mécanique, hydraulique ou électrique.

12. Épandeur à engrais selon l'une quelconque des revendications 1 à 10, **caractérisé en ce que** le dispositif de protection est formé par un rideau de détection, par exemple un rideau laser, arrêtant immédiatement les disques d'épandage dès qu'un objet pénètre ledit rideau, lorsque les pistons doseurs sont fermés et que le tracteur est à l'arrêt.

13. Épandeur à engrais selon l'une quelconque des revendications 1 à 10, **caractérisé en ce que** le dispositif de protection comporte un circuit logique placé dans le terminal de commande ou un système de guidage électronique agricole de l'épandeur à engrais déconnectant l'entraînement des disques d'épandage et/ou les agitateurs lorsque les pistons doseurs sont fermés et que le tracteur est à l'arrêt.

14. Épandeur à engrais selon l'une quelconque des revendications 1 à 13, **caractérisé en ce qu'**un signal sonore puissant et/ou un affichage d'alarme sont activés sur l'affichage du terminal de commande lorsque le tracteur est à l'arrêt et que les pistons doseurs sont fermés mais que les disques d'épandage et/ou les agitateurs tournent.

15. Épandeur à engrais selon l'une quelconque des revendications 1 à 14, **caractérisé en ce qu'**en cas d'épandeur à engrais avec réglage de quantité de dosage dépendant de la vitesse d'avancement déconnecté, le signal de vitesse d'avancement instantané n'est déduit que pour déconnecter le dispositif de protection.

16. Épandeur à engrais selon l'une quelconque des revendications 1 à 13, **caractérisé en ce qu'**en cas d'entraînement des disques d'épandage et/ou des agitateurs par l'arbre de transmission du tracteur, le dispositif de protection comporte un embrayage pouvant être séparé électriquement, hydrauliquement ou mécaniquement dans la chaîne cinématique.

17. Épandeur à engrais selon l'une quelconque des revendications 1 à 15, **caractérisé en ce que** le dispositif de protection comporte des éléments de freinage pouvant rapidement arrêter l'entraînement.

18. Épandeur à engrais selon l'une quelconque des revendications 1 à 17, **caractérisé en ce que** les disques d'épandage et/ou les agitateurs sont automatiquement mis à l'arrêt en cas de panne de courant et/ou de défaut des capteurs.

19. Épandeur à engrais selon la revendication 18, **caractérisé en ce que** des éléments de freinage sont prévus pour la mise à l'arrêt immédiate de l'entraînement.
